# EUROPEAN PATENT SPECIFICATION

(11) **EP 2 090 394 B1**
(45) Date of publication and mention of the grant of the patent: **27.08.2014**
(21) Application number: 08155893.4
(22) Date of filing: 08.05.2008
(51) Int. Cl.: B23D 59/00, B27B 5/06

(54) **Methods for cutting a panel**
Verfahren zum Schneiden einer Platte
Procédés de coupe d'un panneau

(30) Priority: 11.05.2007 IT MO20070158
(43) Date of publication of application: 19.08.2009
(73) Proprietor: SCM Group S.p.A., 47900 Rimini (IT)
(72) Inventor: Spazzoli, Andrea, 47814 Bellaria Igea Marina (RN) (IT)
(74) Representative: Crugnola, Pietro

(56) References cited:
- EP-A1- 1 362 676
- DE-A1- 3 111 256
- DE-A1- 19 801 183
- DE-A1- 19 950 494
- DE-C1- 19 522 717
- US-A1- 2005 277 104

## Description

The invention relates to a method for cutting, by means of a cutting machine, in particular a circular saw, a panel made of wood or similar materials to obtain a plurality of parts from the panel.

Further, there is described a method for selecting whether to position a panel, made of wood or similar materials, to be cut by means of a cutting machine, in particular a circular saw, abutting on first abutting means or on second abutting means of the aforesaid cutting machine, the first abutting means and the second abutting means extending respectively substantially perpendicularly and parallely to a cutting direction along which the cutting machine cuts the aforesaid panel into a plurality of parts.

Cutting machines are known comprising a cutting tool, in particular a circular saw, for cutting into a plurality of parts, along a cutting direction, a panel made of wood or similar materials.

In particular, this panel comprises a first side, a second side, a third side, and a fourth side, and is positionable on the cutting machine so that the first side and the third side extend substantially perpendicularly to the cutting direction, and the second side and the fourth side extend substantially parallely to the cutting direction.

In particular, such cutting machines are arranged for cutting said panel so that, at each cut, the panel is divided into two parts.

In other words, these cutting machines are arranged for making through cuts on the panel.

These cutting machines comprise a supporting carriage for supporting the panel.

This supporting carriage extends, and is movable by an operator, substantially parallely to the cutting direction, for moving the aforesaid panel towards and away from the cutting tool.

These cutting machines further comprise first abutting means and second abutting means positioned opposite the cutting tool that are usable and selectable alternatively by the operator to act as an abutment for the panel during cutting. The first abutting means comprises a first abutting element, or line, positionable by the operator in a desired operating position, depending on the dimensions of the panel, along and above the supporting carriage.

This first abutting element extends substantially perpendicularly to the cutting direction and comprises a first abutting wall arranged, in use, to abut on the first side or on the third side of the panel.

The first abutting means further comprises one or more abutments, or stops, slidably supported by the first abutting element.

Such abutments are manually positionable by the operator along the first abutting element in a plurality of working positions.

In particular, each abutment is movable between an active position in which the abutment interacts with, and acts as an abutment for, the second side or the fourth side of the panel, and a non-active position, in which the abutment does not interact with the panel.

The second abutting means, which is usable alternatively to the first abutting means, comprises a second motor-driven abutting element, or guide, that is movable towards or away from the cutting tool substantially perpendicularly to the cutting direction.

In particular, this second abutting element extends substantially parallely to the cutting direction and comprises a second abutting wall arranged, in use, for abutting on the second or the fourth side of the panel.

These cutting machines further comprise a screen, by means of which the operator can interact with the cutting machine. In particular, this screen enables the operator to provide the dimensions of the panel to be cut and the further dimensions of the parts into which it is desired to cut the panel with an optimisation software arranged for optimising the cuts to be made on the panel for obtaining the aforesaid parts, minimising the waste.

This screen also enables a scheme of the panel divided into the aforesaid parts to be displayed as well as the dimensions of this parts and a list of cuts to be made, the scheme, the dimensions and the list being processed by the optimisation software.

When the operator desires to cut the panel into the aforesaid parts, he must perform a plurality of operations.

In particular, such operations may initially comprise drawing on the panel the dimensions of the aforesaid parts provided by the optimisation software.

Subsequently, these operations comprise, for each cut, choosing how to position the panel on the cutting machine, i.e. whether to position the panel abutting on the first abutting means or on the second abutting means, and making the calculations necessary for positioning correctly the abutments on the first abutting element or alternatively the second abutting element with respect to the cutting tool.

It is clear how such operations are extremely slow and laborious to implement and need to be performed by an expert and qualified operator, i.e. an operator provided with sufficient experience.

These operations are further particularly complex and may entail errors or choices on the part of the operator that are not optimal, even if the operator is an expert, which may increase machining rejects.

DE19801183A1 discloses a sawing machine with an adjustable workpiece table. The sawing machine has a stationary mounted circular saw provided with an L-shaped guide rail attached alongside. A rectangular worktop is movable joined to tappets which are slid along the rails causing the worktop to perform a circular motion after a series of cuts along several sheets of wood is completed and the same items are now to be cut to size along their shorter sides. A support column is fixed to the worktop from below and rotates on a ball base when the worktop is rotated or it can be fixed to the bottom and can be moved on a ball element positioned between the worktop and the column.

DE3111256A1 describes an apparatus for staggered cutting of planar workpieces. The apparatus includes a saw movable through a cutting stroke in a substantially horizontal direction with a first and a second table being provided on opposite sides of the saw. The planar workpieces are first fed from the first table onto the second table through a first cutting operation and the cut parts are rotated relative to the saw on the second table and then fed through a second cutting operation back onto the first table. A pusher device is provided on the second table for feeding the planar cut parts and a feeding device on the first table operates to selectively feed planar strips from the first table to the second table. The first table is provided with two sets of rollers capable of conveying planar parts in two transverse directions with the sets of rollers being vertically displaceable relative to each other.

DE19522717C1 relates to a process for the cutting or stamping of individual parts from an animal skin in which the contours of the individual parts are stored in a computer and can be assembled to form a cutting pattern, and, for optimizing the cutting, the cutting pattern is established individually as a function of the quality of the skin and is projected by a projection device onto the skin.

US2005/277104A1 discloses an automatic cutting machine teaching device which includes image processing means and judgment means. The image processing means displays an image of a cutting area on a monitor and superimposes a cutting pattern of corrected making data on a position corresponding to the image of the cutting area displayed on the monitor. The judgment means judges whether the cutting pattern is entirely contained within the cutting area. If the cutting pattern is not entirely contained in the cutting area, the judgment means decides to cause an error and displays a portion of the cutting pattern out of the cutting area on the monitor.

An object of the invention is to improve the methods for cutting by means of a cutting machine, in particular a circular saw, a panel made of wood or similar materials to obtain a plurality of parts from the panel.

A further object is to provide a method for cutting a panel that is fast and simple to be implemented.

A still further object is to obtain a method for cutting a panel that enables machining rejects to be reduced with respect to known methods.

According to the invention there is provided a method as defined in claim 1.

Owing to the invention, it is possible to simplify and speed up the operations that are necessary for cutting said panel, and to reduce significantly the possibilities of error and consequently machining rejects.

In fact, said sequence of operations, processed by a suitable computer programme, is displayed by screen means of said machine and is also makeable by an inexpert operator.

In particular, on each screen page of said screen means, corresponding to a step of said sequence of operations, graphic indications are provided to the operator to distinguish a portion of said panel to be cut and a further portion of said panel already cut.

Further, on each screen page further graphic indications are provided to distinguish a first part and a second part of said portion that, after being cut, have to remain on said machine to be still subsequently cut and/or have to be removed from said machine and have not be subsequently cut and/or have to be removed from said machine and have not be subsequently reused and/or have to be removed from said machine and have to be subsequently reused and/or have to be removed from said machine and have to be positioned on a stack.

Further, on each screen page other graphic indications are provided on how to position said portion on said machine and on how to position said first abutting means and said seconds abutting means to obtain said first part and said second part.

There is provided a further method for selecting whether to position a panel made of wood or similar materials to be cut along a cutting direction abutting on first abutting means or on second abutting means of a cutting machine arranged for cutting said panel into a plurality of parts, said first abutting means and said second abutting means extending respectively substantially perpendicularly and parallely to said cutting direction, wherein there is provided indicating to an operator that said panel has to be rested against said first abutting means if a first dimension of said panel extending substantially perpendicularly to said cutting direction is greater than a second dimension of said panel extending substantially parallely to said cutting direction, or that said panel has to be rested against said second abutting means if said first dimension is less than said second dimension.

Owing to this further method, it is possible to facilitate and make more rapid choosing whether to position said panel abutting on said first abutting means or on said second abutting means.

In fact, this choice is made by a suitable computer programme comprising a code for implementing the further method, which, in function of certain parameters entered by the operator, chooses whether it is more suitable to position said panel abutting on said first abutting means or said second abutting means.

The result of this choice is then displayed on screen means of said cutting machine.

The invention can be better understood and implemented with reference to the attached drawings that illustrate an embodiment thereof by way of non-limiting example, in which:
Figure 1 is a schematic top view of a cutting machine;
Figure 2 is a schematic top view of a panel;
Figure 3 is a schematic top view of the panel in Figure 2 divided into a plurality of parts;
Figure 4 is a block diagram that illustrates a method for positioning the panel in Figure 2 on the cutting machine in Figure 1;
Figures 5 to 10 are schematic front views of some examples of screen pages of screen means included in the cutting machine in Figure 1 illustrating respective steps of a method for cutting the panel in Figure 2 into a plurality of parts by means of the cutting machine in Figure 1.

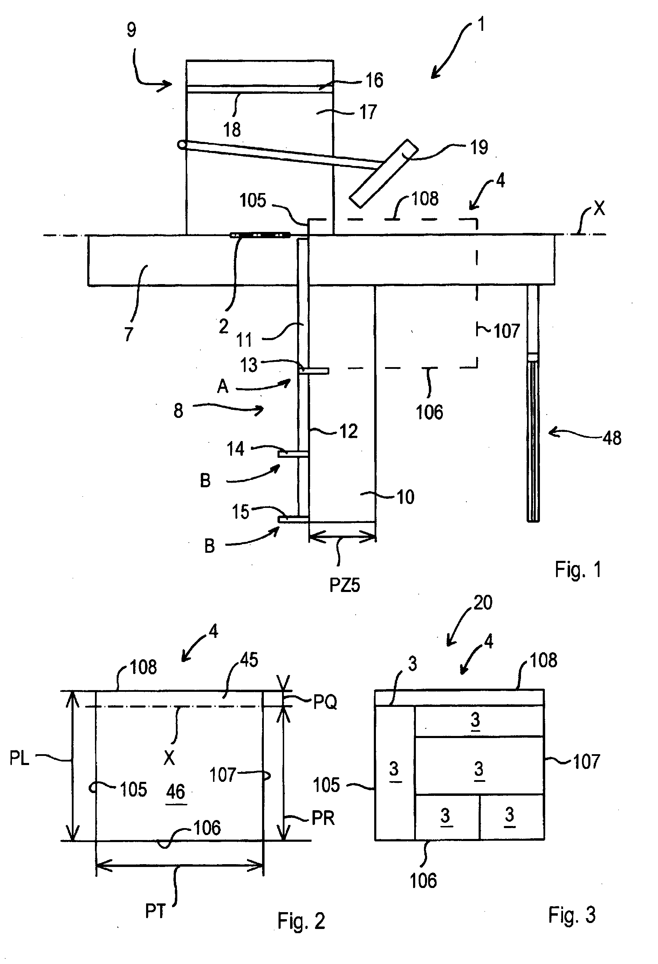

With reference to Figure 1, there is shown a cutting machine 1, in particular a circular saw.

The cutting machine 1 comprises a cutting tool 2, in particular a circular saw, for cutting into a preset plurality of parts 3 (Figure 3), along a cutting direction X, a panel 4 (illustrated by a broken line in Figure 1).

In particular, the panel 4, made of wood or similar materials, comprises a first side 105, a second side 106, a third side 107 and a fourth side 108, and is positionable on the machine tool 1 so that, for example, the first side 105 and the third side 107 extend substantially perpendicularly to the cutting direction X, whilst the second side 106 and the fourth side 108 extend substantially parallely to the cutting direction X.

Further, the first side 105 is opposite and has, for example, substantially the same length as the third side 107, whilst the second side 106 is opposite and has, for example, substantially the same length as the fourth side 108.

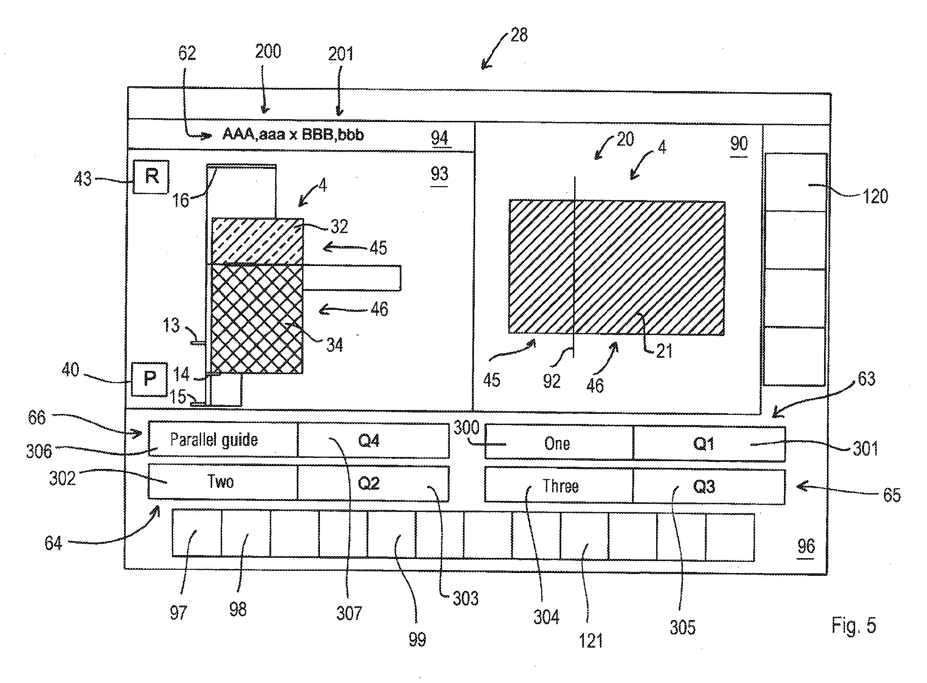

The cutting machine 1 is arranged for sectioning the panel 4 so that, at each cut, from the panel 4 a first part 45 and a second part 46 (Figure 2 and Figure 5) are obtained.

In other words, the cutting machine 1 is arranged for making through cuts on the panel 4.

The cutting machine 1 comprises a supporting carriage 7 for supporting the panel 4.

The supporting carriage 7 extends, and is movable by an operator, who is not shown, substantially parallely to the cutting direction X, to move the panel 4 towards and away from the cutting tool 2.

The cutting machine 1 further comprises first abutting means 8 and second abutting means 9, for abutting on the panel 4 during cutting, positioned on sides opposite the cutting tool 2.

The first abutting means 8 comprises a frame 10 supporting a first abutting element 11, or line, positionable by the operator in a desired operating position along and above the supporting carriage 7, depending on the dimensions of the panel 4.

The first abutting element 11 extends substantially perpendicularly to the cutting direction X and comprises a first abutting wall 12, arranged, in use, for abutting on, for example, the first side 105.

The first abutting means 8 is further provided with abutments 13, 14, 15, or stops, for example comprising a first abutment 13, a second abutment 14 and a third abutment 15.

The first abutment 13, the second abutment 14 and the third abutment 15 are each positionable manually by the operator along the first abutting element 11 in a plurality of working positions.

In an embodiment of the invention, which is not shown, the first abutment 13, the second abutment 14 and the third abutment 15 are motor-driven.

Further, the first abutment 13, the second abutment 14 and the third abutment 15 are each movable between an active position A in which, in use, they interact with, and act as an abutment for, for example, the second side 106, and a non-active position B, in which they do not interact with the panel 4.

The second abutting means 9 comprises a second abutting element 16, or guide, which is motor-driven or manually movable by the operator.

The second abutting element 16 is slidable above a supporting plane 17 arranged for supporting, at least partially, in use, the panel 4.

In particular, the second abutting element 16 is movable towards, and away from, the cutting tool 2 substantially perpendicularly to the cutting direction X.

Further, the second abutting element 16 extends substantially parallely to the cutting direction X and comprises a second abutting wall 18, arranged, in used, for abutting on, for example, the fourth side 108.

The cutting machine 1 may further comprise a device 48 for making parallel cuts, the device 48, of known type and for this reason not disclosed in detail, being movable by the operator substantially parallely to the cutting direction X. The cutting machine 1 further comprises a management and control unit, which is not shown, comprising a computer system into which an optimisation software is loaded to optimise the cuts to be made on the panel 4 to obtain the aforesaid parts 3, minimising waste.

In particular, the optimisation software enables a scheme 20 (Figure 3) of the panel 4 divided into the plurality of parts 3 and a sequence of cuts to be made for obtaining the parts 3 from the panel 4 to be processed.

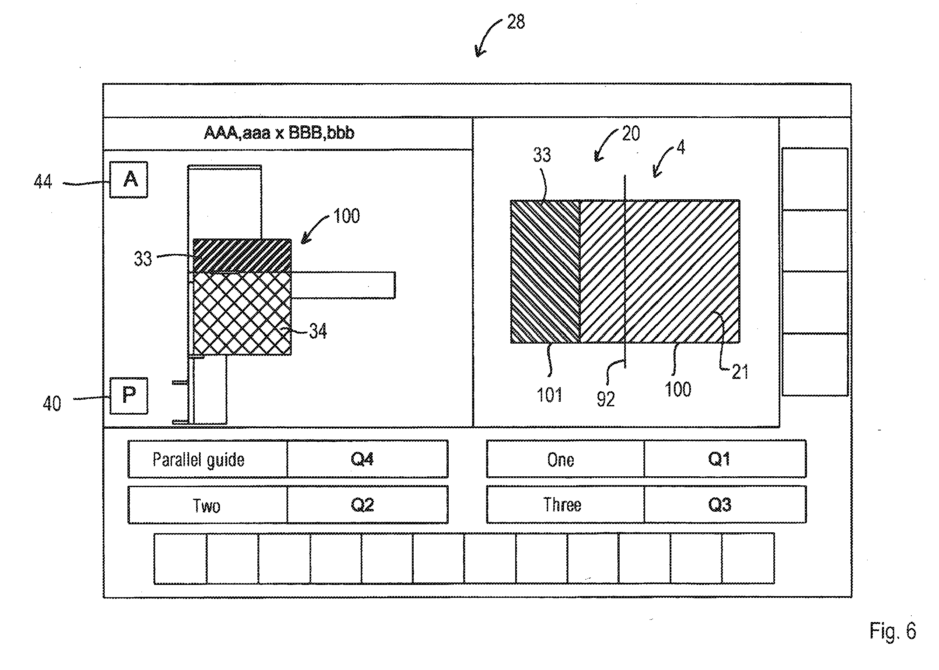

In the computer system, a programme is further loaded, for example contained in a data carrier that is readable by the computer, for indicating to the operator, for each cut, whether to position the panel 4, or a portion 100 of the panel 4 previously cut and still to be cut subsequently (Figure 6), abutting on the first abutting means 8 or on the second abutting means 9, this choice being made so as to ensure, for each cut, the best possible support for the panel 4 (or for the portion 100).

This programme makes it possible to indicate to the operator, as will be explained better below, either that the panel 4 (or the portion 100) has to be rested against the first abutting means 8 if a first dimension PL of the first side 105 is greater than a second dimension PT of the second side 6, or that the panel 4 has to be rested against the second abutting means 9 if the first dimension PL is less than the second dimension PT (Figure 2).

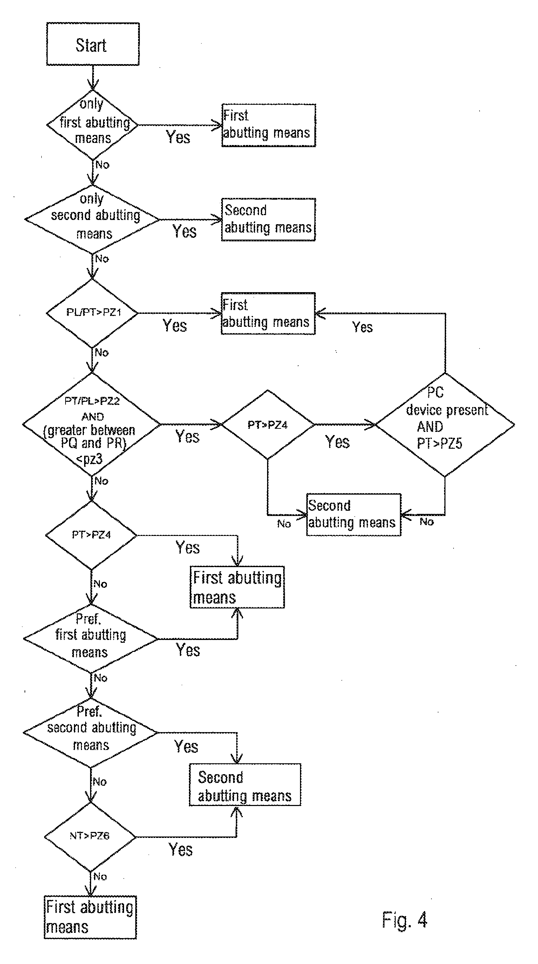

With reference to Figure 4, there is shown a block diagram, illustrating the algorithm used by the aforesaid programme to choose, cut for cut, whether to use the first abutting means 8 or the second abutting means 9.

This programme receives as input the scheme 20 and the sequence of cuts processed by the optimisation software.

Subsequently, the programme chooses which between the first part 45 and the second part 46 has to be subsequently positioned to abut on the first abutting means 8 or on the second abutting means 9, this choice being made so as to choose, for each cut, to position that part between the first part 45 and the second part 46 having a greater extent, perpendicularly to the cutting direction X.

In order to do this, the programme compares a ratio between a first length PR of the second part 46 and a second length PQ of the first part 45 with a sample parameter entered by the operator into the control and management unit, the first length PR and the second length PQ being measured substantially perpendicularly to the cutting direction X.

In particular, if this ratio is greater than the sample parameter the programme establishes that it is the second part 46 that has to be subsequently positioned abutting on the first abutting means 8 or on the second abutting means 9, and possibly has to remain on the cutting machine 1 to be still subsequently cut, vice versa, if this ratio is less than the sample parameter the programme establishes that it is the first part 45 that has to be subsequently positioned abutting on the first abutting means 8 or on the second abutting means 9, and possibly has to remain on the cutting machine 1 to be still subsequently cut.

Subsequently, the programme checks if the operator has entered into the control and management unit a first obligatory choice to use, for each cut, the first abutting means 8.

If this occurs, the programme indicates to the operator to use the first abutting means 8, otherwise the programme checks if the operator has entered into the control and management unit a second obligatory choice to use, for each cut, the second abutting means 9.

If this occurs, the programme indicates to the operator to use the second abutting means 9, on the other hand, the programme compares a ratio between the first dimension PL and the second dimension PT (of the panel 4 or of the portion 100) with a first sample parameter PZ1, entered by the operator and indicating a first threshold dimension of the panel 4, this first threshold dimension extending substantially perpendicularly to said cutting direction X.

If the ratio between the first dimension PL and the second dimension PT is greater than the first sample parameter PZ1 the panel 4 (or the portion 100) is considered long and the programme establishes that the panel 4 (or the portion 100) has to be positioned abutting on the first abutting means 8. On the other hand, if the ratio between the first dimension PL and the second dimension PT is less than the first sample parameter PZ1 the programme compares a ratio between the second dimension PT and the first dimension PL with a second sample parameter PZ2, entered by the operator and indicating a second threshold dimension of the panel 4, this second threshold dimension extending substantially parallely to the cutting direction X, and compares the greater of the first length PR and the second length PQ with a third sample parameter PZ3 entered by the operator and indicating a third threshold dimension of the panel 4, this third threshold dimension extending substantially perpendicularly to the cutting direction X.

If the ratio between the second dimension PT and the first dimension PL is greater than the second sample parameter PZ2 and the greater of the first length PR and the second length PQ is less than the third sample parameter PZ3, this means that the panel 4 (or the portion 100) is wide.

Subsequently, the programme compares the second dimension PT with a fourth sample parameter PZ4 entered by the operator and indicating a fourth threshold dimension of the panel 4 extending substantially parallely to the cutting direction X.

If the second dimension PT is less than the fourth sample parameter PZ4, the programme chooses to position the panel 4 (or the portion 100) abutting on the second abutting means 9.

On the other hand, if the second dimension PT is greater than the fourth sample parameter PZ4 the programme checks if the cutting machine 1 comprises the device 48 for making parallel cuts, and compares the second dimension PT with a fifth sample parameter PZ5 (Figure 1) indicating the dimensions, measured substantially parallely to the cutting direction X of the frame 10 of the first abutting means 8.

In other words, the fifth sample parameter PZ5 is the minimum distance at which the first abutting means 8 can be located from the device 48, below this minimum distance it not being possible to use the device 48 inasmuch as it interferes with the frame 10.

If the cutting machine 1 comprises the device 48 and the second dimension PT is greater than the fifth sample parameter PZ5 the programme chooses to position the panel 4 (or the portion 100) abutting on the first abutting means 8, on the other hand, if the cutting machine 1 does not comprise the device 48 and/or the second dimension PT is less than the fifth sample parameter PZ5, the programme chooses to position the panel 4 (or the portion 100) abutting on the second abutting means 9.

Further, if the aforesaid ratio between the second dimension PT and the first dimension PL is less than the second sample parameter PZ2 and/or the greater of the first length PR and the second length PQ is greater than the third sample parameter PZ3, i.e. the panel 4 (or the portion 100) is neither wide nor long, the programme again compares the second dimension PT with the fourth sample parameter PZ4.

If the second dimension PT is greater than the fourth sample parameter PZ4 the programme chooses to position the panel 4 (or the portion 100) abutting on the first abutting means 8.

On the other hand, if the second dimension PT is less than the fourth sample parameter PZ4, the programme checks if the operator has entered a preferential choice for using the first abutting means 8.

If he has, the programme chooses to position the panel 4 (or the portion 100) abutting on the first abutting means 8.

If he has not, the programme checks if the operator has entered a preferential choice to use the second abutting means 9.

If the operator has entered the preferential choice to use the second abutting means 9, the programme chooses to position the panel 4 (or the portion 100) abutting on the second abutting means 9.

On the other hand, if the operator has not entered the preferential choice to use the second abutting means 9, the programme compares a value NT indicating a number of cuts that it is desired to make on the panel 4 (or on the portion 100) substantially parallely to the cutting direction X with a sixth sample parameter PZ6 entered by the operator and indicating a maximum number of cuts makeable substantially parallely to the cutting direction X.

If this value NT is greater than the sixth sample parameter PZ6, the programme establishes positioning the panel 4 (or the portion 100) abutting on the second abutting means 9, on the other hand, if the value NT is less than the sixth sample parameter PZ6, the programme establishes positioning the panel 4 (or the portion 100) abutting on the first abutting means 8.

It should be noted that the programme, whenever it establishes that the first abutting means 8 has to be used, indicates to the operator, as will be described better below, whether to use the first abutment 13, the second abutment 14 or the third abutment 15, this choice being made so as to minimise the movements of the first abutment 13, of the second abutment 14 and of the third abutment 15 along the first abutting element 11, and the respective positions of the first abutment 13, of the second abutment 14 and of the third abutment 15 on the first abutting element 11.

On the other hand, if the second abutting means 9 has to be used, the programme supplies, as will be described better below, the position of the second abutting element 16 on the working surface 17.

In the computer system a further programme is further loaded, for example contained in a further data carrier that is readable by the computer, for cutting the panel 4 into the parts 3, this further programme enabling a sequence of screen pages (Figures 5 to 10) to be displayed on screen means 19 (Figure 1), for example comprising a touchscreen, each screen page 28 corresponding to a step of a sequence of operations to handle the panel 4 so as to divide the panel 4 into the parts 3.

In other words, this sequence of operations indicates to the operator, for each cut, how to position the panel 4 (or the portion 100) on the cutting machine 1 and how to position the abutments 13, 14, 15 on the first abutting element 11 and the second abutting element 16 with respect to the cutting tool 2 for obtaining the parts 3.

Each of the aforesaid screen pages 28, illustrated in Figures 5 to 10, comprises a first area 90 in which the scheme 20 of the panel 4 is displayed.

The scheme 20 comprises a graphic indication 21, for example a colour code or a coloured background, that distinguishes the portion 100 of the panel 4 that has to be positioned on the cutting machine 1 to be cut, this portion 100 coinciding, in the case of a first cut, with the panel 4 (Figure 5).

This scheme 20 further comprises (Figures 6 to 10) a first graphic indication 25 and/or a second graphic indication 31 and/or a third graphic indication 32 and/or a fourth graphic indication 33, for example comprising a colour code or a background, that distinguish further portions 101 of the panel 4 that after being cut have been removed from the cutting machine 1 and respectively subsequently no longer have to be cut, have to be subsequently reused, can be subsequently reused, have been positioned in a stack.

On the portion 100 the cutting direction X is further represented, for example by a line 92 coloured red, along which the portion 100 is cut by the cutting tool 2 so as to obtain the first part 45 and the second part 46.

Each screen page 28 further comprises a second area 93 in which the cutting machine 1 is shown schematically on which the portion 100 to be cut is positioned.

The first part 45 and the second part 46 of the portion 100, or of the panel 4 in the case of a first cut, can be distinguished from the first graphic indication 25, from the second graphic indication 31, from the third graphic indication 32, from the fourth graphic indication 33 and from a fifth graphic indication 34, the fifth graphic indication 34 comprising, for example, a colour code or a coloured background.

In particular, the fifth graphic indication 34 (Figures 5, 6, 7, 9 and 10) indicates that the first part 45, or the second part 46, after being cut, has to remain on the machine 1 to be still subsequently cut.

It should be noted that on the screen page 28 in the second area 93 there can be provided, near the first part 45, or the second part 46, and to the left of the schematic representation of the machine tool 1, a first letter 40, or alternatively a first icon, which is not shown, indicating that the first part 45, or the second part 46, after being cut, has to remain on the machine 1 to be still subsequently cut, i.e. it is a semifinished part.

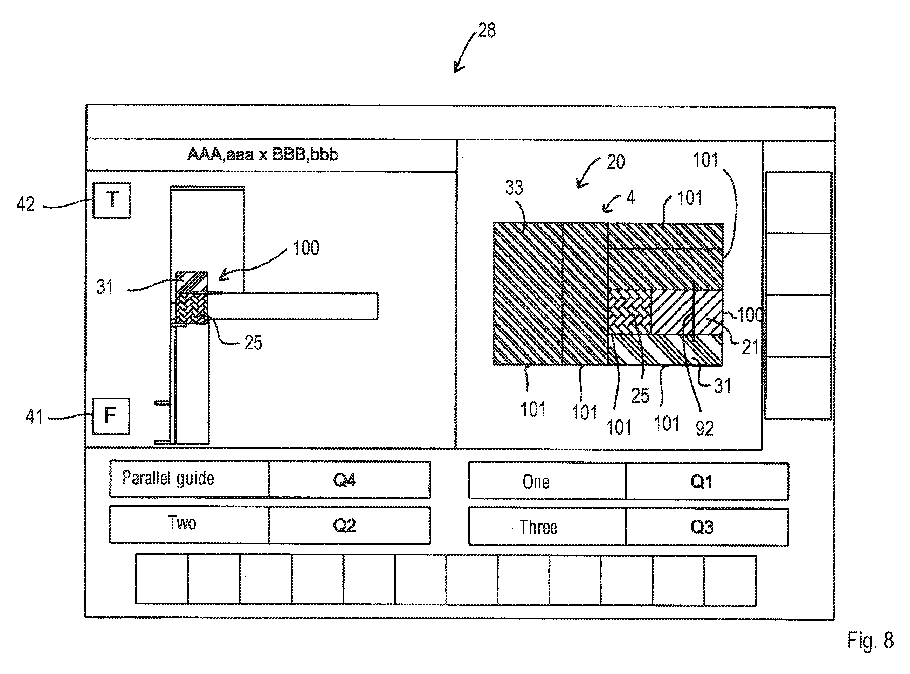

The first graphic indication 25 (Figures 8-10) indicates that the first part 45, or the second part 46, after being cut has to be removed from the machine 1 and does not have to be subsequently cut, i.e. it is a finished part.

It should be noted that, on the screen page 28 in the second area 93 there can be provided, near the first part 45, or the second part 46, and to the left of the schematic representation of the cutting machine 1, a second letter 41, or alternatively a second icon, which is not shown, indicating that the first part 45, or the second part 46, after being cut, has to be removed from the machine 1 and does not have to be subsequently cut, i.e. it is a finished part.

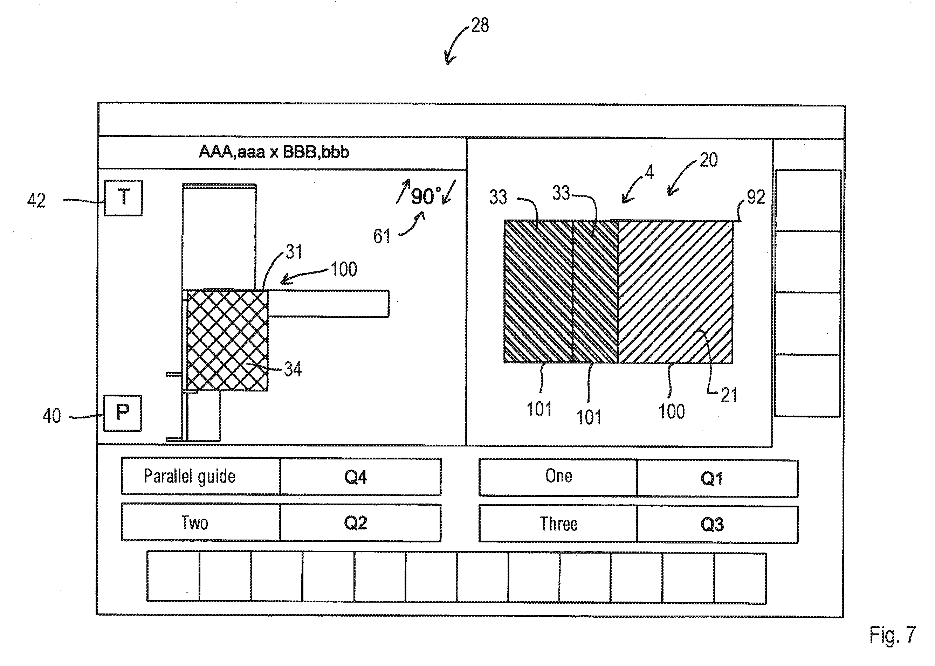

The second graphic indication 31 (Figures 7 and 8) indicates that the first part 45, or the second part 46, after being cut has to be removed from the machine 1 and does not have to be subsequently reused, i.e. it is a reject part.

It should be noted that, on the screen page 28 in the second area 93 there can be provided, near the first part 45, or the second part 46, and to the left of the schematic representation of the cutting machine 1, a third letter 42, or alternatively a third icon, which is not shown, indicating that the first part 45, or the second part 46, after being cut has to be removed from the machine 1 and does not have to be subsequently reused, i.e. it is a reject part.

The third graphic indication 32 (Figure 5) indicates that the first part 45, or the second part 46, after being cut has to be removed from the machine 1 and can be subsequently reused, i.e. it is a "rest" part.

It should be noted that on the screen page 28 in the second area 93 there can be provided, near the first part 45, or the second part 46, and to the left of the schematic representation of the cutting machine 1, a fourth letter 43, or alternatively a fourth icon, which is not shown, indicating that the first part 45, or the second part 46, after being cut has to be removed from the machine 1 and can be subsequently reused, i.e. it is a "rest" part.

The fourth graphic indication 33 (Figure 6) indicates that the first part 45, or the second part 46, after being cut has to be removed from the machine 1 and has to be positioned on the top of a stack of semifinished parts, which is not shown, this stack being managed according to the "Last In First Out" (LIFO) criterion, i.e. the last part that is positioned on the stack is the first that has to be removed therefrom.

It should be noted that, on the screen page 28 in the second area 93 there can be provided, near the first part 45, or the second part 46, and to the left of the schematic representation of the cutting machine 1 a fifth letter 44, or alternatively a fifth icon, which is not shown, indicating that the first part 45, or the second part 46, after being cut has to be removed from the machine 1 and has to be positioned in a stack.

The screen page 28 further comprises a sixth graphic indication 61 (Figure 7) positioned in the second area 93 that indicates by how many degrees and in which direction the portion 100 has to be rotated before being cut, for example in the case or squaring or trimming operations.

The screen page 28 further comprises a third area 94 positioned above the second area 93 in which a seventh graphic indication 62 is provided that indicates how to position the portion 100 on the cutting machine 1.

In particular, this seventh graphic indication 62 comprises the dimensions of the portion 100 to be cut defined by a product between a first value 200 and a second value 201, the first value 200 indicating the length of the side of the portion 100 that has to be positioned parallel to the cutting direction X.

The screen page 28 is further provided with a fourth area 96 positioned substantially below the first area 90 and the second area 93.

The fourth area 96 comprises an eighth graphic indication 63, for example a colour code or a coloured background, that distinguishes the first abutment 13.

In particular, the eighth graphic indication 63 comprises a first reference 300, for example an alphanumeric code or a symbol, that indicates the first abutment 13, and a further first reference 301, that indicates a first dimension Q1 at which to position the first abutment 13 along the first abutting element 11.

This eighth graphic indication 63 is further shown (for example in the examples in Figure 6, 8 and 9) when the first abutment 13 has to be positioned in the active position A to act as an abutment for the portion 100.

The fourth area 96 is further provided with a ninth graphic indication 64, for example a colour code or a coloured background, that distinguishes the second abutment 14.

In particular, the ninth graphic indication 64 comprises a second reference 302, for example an alphanumeric code or a symbol, that indicates the second abutment 14, and a further second reference 303, that indicates a second dimension Q2 at which to position the second abutment 14 along the first abutting element 11.

This ninth graphic indication 64 is further highlighted (for example in the examples in Figure 5 and 7) when the second abutment 14 has to be positioned in the active position A to act as an abutment for the portion 100.

The fourth area 96 is further provided with a tenth graphic indication 65, for example a colour code or a coloured background, that distinguishes the third abutment 15.

In particular, the tenth graphic indication 65 comprises a third reference 304, for example an alphanumeric code or a symbol, that indicates the third abutment 15, and a further third reference 305, that indicates a third dimension Q3 at which to position the third abutment 15 along the first abutting element 11.

This tenth graphic indication 65 is further highlighted when the third abutment 15 has to be positioned in the active position A to act as an abutment for the portion 100.

The fourth area 96 is further provided with an eleventh graphic indication 66, for example a colour code or a coloured background, that distinguishes the second abutting element 16.

In particular, the eleventh graphic indication 66 comprises a fourth reference 306, for example an alphanumeric code or a symbol, that indicates the second abutting element 16, and a further fourth reference 307, that indicates a fourth dimension Q4 at which to position the second abutting element 16 along the working surface 17, with respect to the cutting tool 2.

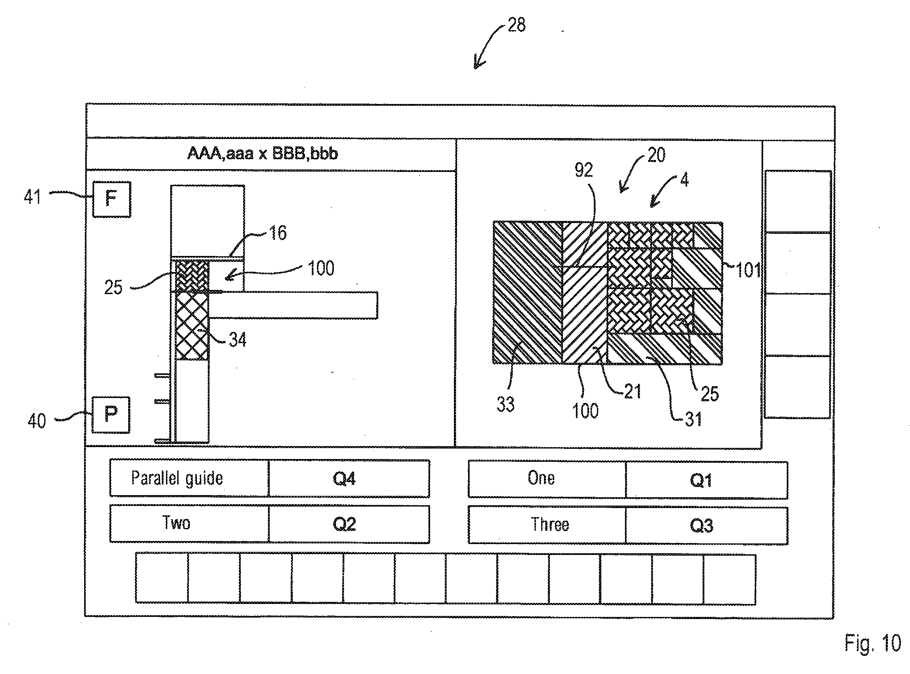

This eleventh graphic indication 66 is further highlighted when the second abutting element 16 has to act as an abutment for the portion 100 (Figure 10).

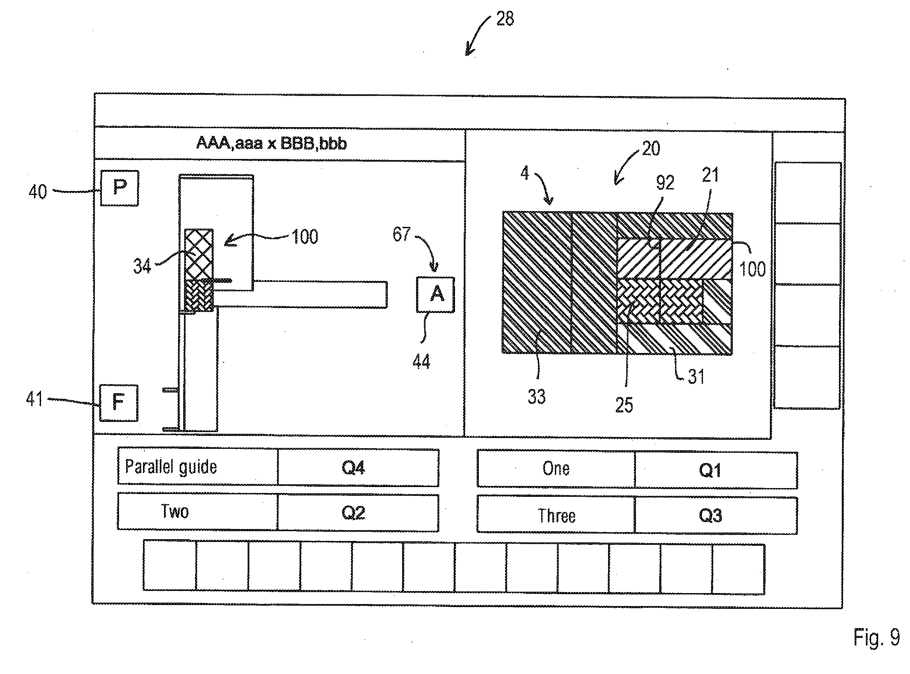

The screen page 28 further comprises a twelfth graphic indication 67, for example comprising the fifth letter 44, or the fifth icon, positioned in the second area 93 to the right of the schematic representation of the cutting machine 1 and indicating that the subsequent portion 100 to be cut has to be removed from the top of the aforesaid stack (Figure 9). In other words, the twelfth graphic indication 67 indicates to the operator how to manage the aforesaid stack according to the aforesaid "LIFO" criterion.

The screen page 28 further comprises a first sensitive area 97, distinguished, for example, by a symbol or by an icon, which are not shown, that enables the operator to update a warehouse with the parts 3 obtained from the panel 4.

The screen page 28 further comprises a second sensitive area 98, distinguished, for example, by a symbol or by an icon, which are not shown, that enables the operator to select a sequence of operations to handle the panels 4 between a plurality of selectable sequences.

The screen page 28 further comprises a third sensitive area 99, distinguished, for example, by a symbol or by an icon, which are not shown, that enables the operator to position the second abutting element 16 on the working surface 17 in a preset position.

The screen page 28 further comprises a fourth sensitive area 120, distinguished, for example, by a symbol or by an icon, which are not shown, that enables the operator to view a demonstration of the sequence of operations.

The screen page 28 further comprises a fifth sensitive area 121, distinguished, for example, by a symbol or by an icon, which are not shown, that enables the operator to view the contents of the stacks.

The further programme also provides for squaring the panel 4 (Figure 6) before making the subsequent cuts.

Squaring is thus normally always the first operation displayed on the screen means 19, unless precuts are provided for reducing the dimensions of the panel 4.

In this case, squaring is performed on the first part 45 and on the second part 46 obtained from the precut.

Further, the first two cuts of the squaring are always made using the first abutting means 8, whilst the other two can also be made the second abutting means 9.

In this case the choice is made by the aforesaid programme.

Lastly, the quantity of material removed during squaring depends on a parameter that is enterable into the optimisation software.

## Claims

1. Method for cutting, by means of a cutting machine (1), a panel (4) made of wood or similar materials for obtaining from said panel (4) a plurality of parts (3), said method comprising providing a graphic display (20) of said panel (4) divided into said plurality of parts (3), **characterised in that** there is provided displaying a sequence of operations indicating how to handle said panel (4) so as to divide said panel (4) into said plurality of parts (3).

2. Method according to claim 1, wherein said displaying comprises providing a graphic indication (21) that distinguishes a portion (100) of said panel (4) that has to be cut and a further graphic indication (25, 31, 32, 33) that distinguishes a further portion (101) of said panel (4) that has already been cut.

3. Method according to claim 1, or 2, wherein said displaying comprises providing a first graphic indication (25), a second graphic indication (31) and a third graphic indication (32) that respectively distinguish a part of said portion (100) that after being cut has to be removed from said machine (1) and has not to be subsequently cut, a further part of said portion (100) that after being cut has to be removed from said machine (1) and must not be subsequently reused, and a still further part of said portion (100) that after being cut has to be removed from said machine (1) and can be subsequently reused.

4. Method according to any preceding claim, wherein said displaying comprises providing a fourth graphic indication (33) and a fifth graphic indication (34) that respectively distinguish another part of said portion (100) that after being cut has to be removed from said machine (1) and has to be positioned in a stack and another further part of said portion (100) that after being cut has to remain on said machine (1) to be still subsequently cut.

5. Method according to claim 4, as claim 4 is appended to claim 3, as claim 3 is appended to claim 2, wherein said further graphic indication (25, 31, 32, 33) comprises said first graphic indication (25) and/or said second graphic indication (31) and/or said third graphic indication (32) and/or said fourth graphic indication (33).

6. Method according to any one of claims 2 to 5, as claims 3 and 4 are appended to claim 2, wherein said displaying comprises providing a sixth graphic indication (61) that indicates by how many degrees and in which direction said portion (100) has to be rotated before being cut, a seventh graphic indication (62) that distinguishes a side of said portion (100) that has to be positioned substantially parallely to a cutting direction (X) along which said portion (100) is cut, and an eighth graphic indication (63) that distinguishes a first abutment (13) of said machine (1) arranged for abutting on said side or a further side of said portion (100) opposite said side and extending substantially parallely to said cutting direction (X).

7. Method according to claim 6, wherein said eighth graphic indication (63) comprises a first dimension (Q1) indicating a position of said first abutment (13) on said machine (1) and said displaying comprises highlighting said eighth graphic indication (63) when said first abutment (13) has to abut on said side or said further side.

8. Method according to claim 6, or 7, wherein said displaying comprises providing a ninth graphic indication (64) that distinguishes a second abutment (14) of said machine (1) arranged for abutting on said side or said further side, said ninth graphic indication (64) comprising a second dimension (Q2) indicating a position of said second abutment (14) on said machine (1) and said displaying comprising highlighting said ninth graphic indication (64) when said second abutment (14) has to abut on said side or said further side.

9. Method according to any one of claims 6 to 8, wherein said displaying comprises providing a tenth graphic indication (65) that distinguishes a third abutment (15) of said machine (1) arranged for abutting on said side or said further side, said tenth graphic indication (65) comprising a third dimension (Q3) indicating a position of said third abutment (15) on said machine (1) and said displaying comprising highlighting said tenth graphic indication (65) when said third abutment (15) has to abut on said side or said further side.

10. Method according to any one of claims 6 to 9, wherein said displaying comprises providing an eleventh graphic indication (66) that distinguishes a guide element (16) of said machine (1) arranged for abutting on said side or said further side, said eleventh graphic indication (66) comprising a fourth dimension (Q4) indicating a position of said guide element (16) on said machine (1) and said displaying comprising highlighting said eleventh graphic indication (66) when said guide element (16) has to abut on said side or said further side.

11. Method according to any preceding claim, wherein said displaying comprises providing a twelfth graphic indication (67) for managing a stack of semifinished portions of said panel (4) according to the "Last In First Out" (LIFO) criterion, a thirteenth graphic indication (92) that distinguishes a cutting line of said machine (1) on said portion (100) and a fourteenth graphic indication that shows said cutting machine (1).

12. Method according to any one of claims 4 to 11, as claims 4, 6 and 11 are appended to claim 2, wherein said portion, said further portion, said part, said further part, said still further part, said another part and said another further part are identified by a colour code and/or by backgrounds.

13. Method according to any preceding claim, wherein said sequence is selectable on command from a plurality of sequences.

14. Method according to any preceding claim wherein said graphic display (20) and said sequence of operations are displayed on screen means (19) of said machine (1).

15. Programme comprising a code for implementing the method according to claims 1 to 14, when said programme is run in a computer system.

16. Data carrier readable by a computer and containing a programme according to claim 15.

17. Computer system in which a programme according to claim 15 has been loaded or stored.

## Patentansprüche

1. Verfahren zum Schneiden einer Platte (4), die aus Holz oder ähnlichen Materialien hergestellt ist, mittels einer Schneidmaschine (1), um aus der Platte (4) eine Vielzahl von Teile (3) zu erhalten, wobei das Verfahren Folgendes umfasst: Bereitstellen einer graphischen Anzeige (20) der Platte (4), die in eine Vielzahl von Teile (3) unterteilt ist, **dadurch gekennzeichnet, dass** Folgendes vorgesehen ist: Anzeigen einer Sequenz von Handlungen, die angeben, wie die Platte (4) zu bearbeiten ist, um die Platte (4) in die Vielzahl von Teile (3) zu unterteilen.

2. Verfahren nach Anspruch 1, wobei das Anzeigen Folgendes umfasst: Bereitstellen einer graphischen Anzeige (21), die einen Bereich (100) der Platte (4) kennzeichnet, der geschnitten werden muss und Bereitstellen einer weiteren graphischen Anzeige (25, 31, 32, 33), die einen weiteren Bereich (101) der Platte (4) kennzeichnet, der bereits geschnitten worden ist.

3. Verfahren nach Anspruch 1 oder 2, wobei das Anzeigen Folgendes umfasst: Bereitstellen einer ersten graphischen Anzeige (25), einer zweiten graphischen Anzeige (31) und einer dritten graphischen Anzeige (32), die jeweils einen Teil des Bereichs (100) kennzeichnen, der nachdem er geschnitten ist, von der Maschine (1) entfernt werden muss und danach nicht geschnitten werden muss, und die einen weiteren Teil des Bereichs (100) kennzeichnen, der nachdem er geschnitten ist, von der Maschine (1) entfernt werden muss und danach nicht wiederverwendet werden darf, und die noch einen weiteren Teil des Bereichs (100) kennzeichnen, der nachdem er geschnitten ist, von der Maschine (1) entfernt werden muss und danach wiederverwendet werden darf.

4. Verfahren nach einem der vorherigen Ansprüche, wobei das Anzeigen Folgendes umfasst: Bereitstellen einer vierten graphischen Anzeige (33) und einer fünften graphischen Anzeige (34), die jeweils einen anderen Teil des Bereichs (100) kennzeichnen, der nachdem er geschnitten ist, von der Maschine (1) entfernt werden muss und in einem Stapel angeordnet werden muss, und die noch einen weiteren Teil des Bereichs (100) kennzeichnen, der nachdem er geschnitten ist, auf der Maschine (1) bleiben muss, um anschließend noch geschnitten zu werden.

5. Verfahren nach Anspruch 4, soweit Anspruch 4 auf Anspruch 3 zurückbezogen ist, soweit Anspruch 3 auf Anspruch 2 zurückbezogen ist, wobei die weitere graphische Anzeige (25, 31, 32, 33) die erste graphische Anzeige (25) und/ oder die zweite graphische Anzeige (31) und/ oder die dritte graphische Anzeige (32) und/ oder die vierte graphische Anzeige (33) umfasst.

6. Verfahren nach einem der Ansprüche 2 bis 5, soweit Ansprüche 3 und 4 auf Anspruch 2 zurückbezogen sind, wobei das Anzeigen Folgendes umfasst: Bereitstellen einer sechsten graphischen Anzeige (61) die anzeigt, um wieviel Grad und in welche Richtung der Bereich (100) rotiert werden muss, bevor er geschnitten wird, Bereitstellen einer siebten graphischen Anzeige (62), die eine Seite des Bereichs (100) kennzeichnet, die im Wesentlichen parallel zu einer Schneidrichtung (X) ausgerichtet werden muss, entlang welcher der Bereich (100) geschnitten wird, und Bereitstellen einer achten graphischen Anzeige (63), die ein erstes Widerlager (13) der Maschine (1) kennzeichnet, das so angeordnet ist, um an der Seite oder einer weiteren Seite des Bereichs (100) gegenüber der Seite anzustoßen, und sich im Wesentlichen parallel zu der Schneidrichtung (X) erstreckt.

7. Verfahren nach Anspruch 6, wobei die achte graphische Anzeige (63) eine erste Dimension (Q1) umfasst, die eine Position des ersten Widerlagers (13) an der Maschine (1) anzeigt und das Anzeigen Folgendes umfasst: Hervorheben der achten graphischen Anzeige (63), wenn das erste Widerlager (13) an die erste Seite oder die weitere Seite anstoßen muss.

8. Verfahren nach Anspruch 6 oder 7, wobei das Anzeigen Folgendes umfasst: Bereitstellen einer neunten graphischen Anzeige (64), die ein zweites Widerlager (14) der Maschine (1) kennzeichnet, das so angeordnet ist, um an der Seite oder der weiteren Seite anzustoßen, wobei die neunte graphische Anzeige (64) eine zweite Dimension (Q2) umfasst, die eine Position des zweiten Widerlagers (14) an der Maschine (1) anzeigt und wobei das Anzeigen Folgendes umfasst: Hervorheben der neunten graphischen Anzeige (64), wenn das zweite Widerlager (14) an die Seite oder die weitere Seite anstoßen muss.

9. Verfahren nach einem der Ansprüche 6 bis 8, wobei das Anzeigen Folgendes umfasst: Bereitstellen einer zehnten graphischen Anzeige (65), die ein drittes Widerlager (15) der Maschine (1) kennzeichnet, das so angeordnet ist, um an der Seite oder der weiteren Seite anzustoßen, wobei die zehnte graphische Anzeige (65) eine dritte Dimension (Q3) umfasst, die eine Position des dritten Widerlagers (15) an der Maschine (1) anzeigt und wobei das Anzeigen Folgendes umfasst: Hervorheben der zehnten graphischen Anzeige (65), wenn das dritte Widerlager (15) an die Seite oder die weitere Seite anstoßen muss.

10. Verfahren nach einem der Ansprüche 6 bis 9, wobei das Anzeigen Folgendes umfasst: Bereitstellen einer elften graphischen Anzeige (66), die ein Führungs-element (16) der Maschine (1) kennzeichnet, das so angeordnet ist, um an der Seite oder der weiteren Seite anzustoßen, wobei die elfte graphische Anzeige (66) eine vierte Dimension (Q4) umfasst, die eine Position des Führungselements (16) an der Maschine (1) anzeigt und wobei das Anzeigen Folgendes umfasst: Hervorheben der elften graphischen Anzeige (66), wenn das Führungselement (16) an die Seite oder die weitere Seite anstoßen muss.

11. Verfahren nach einem der vorherigen Ansprüche, wobei das Anzeigen Folgendes umfasst: Bereitstellen einer zwölften graphischen Anzeige (67) zum Verwalten eines Stapels von halbfertigen Bereichen der Platte (4) gemäß dem "Last In First Out" (LIFO) Kriterium, Bereitstellen einer dreizehnten graphischen Anzeige (92), die eine Schneidlinie der Maschine (1) an dem Bereich (100) kennzeichnet, und Bereitstellen einer vierzehnten graphischen Anzeige, die die Schneidmaschine (1) anzeigt.

12. Verfahren nach einem der Ansprüche 4 bis 11, soweit Ansprüche 4, 6 und 11 auf Anspruch 2 zurückbezogen sind, wobei der Bereich, der weitere Bereich, der Teil, der weitere Teil, der noch weitere Teil, der andere Teil und der andere weitere Teil durch einen Farbcode und/ oder durch Hintergründe identifiziert werden.

13. Verfahren nach einem der vorherigen Ansprüche, wobei die Sequenz auf Befehl aus einer Vielzahl von Sequenzen auswählbar ist.

14. Verfahren nach einem der vorherigen Ansprüche, wobei die graphische Anzeige (20) und die Sequenz von Handlungen auf Anzeigemitteln (19) von der Maschine (1) angezeigt werden.

15. Programm, umfassend: einen Code zur Implementierung des Verfahrens nach Ansprüchen 1 bis 14, wenn das Programm auf einem Computersystem ausgeführt wird.

16. Datenträger, der von einem Computer lesbar ist und ein Programm nach Anspruch 15 enthält.

17. Computersystem, in dem ein Programm nach Anspruch 15 geladen oder gespeichert ist.

## Revendications

1. Procédé de coupe, au moyen d'une machine de coupe (1), d'un panneau (4) fait de bois ou de matériaux similaires afin d'obtenir à partir dudit panneau (4) une pluralité de parties (3), ledit procédé comprenant la fourniture d'un affichage graphique (20) dudit panneau (4) divisé en ladite pluralité de parties (3), **caractérisé en ce qu'**il est prévu un affichage d'une séquence d'opérations indiquant comment traiter ledit panneau (4) de manière à diviser ledit panneau (4) en ladite pluralités de parties (3).

2. Procédé selon la revendication 1, dans lequel ledit affichage comprend la fourniture d'une indication graphique (21) qui repère une portion (100) dudit panneau (4) qui doit être coupée et d'une indication graphique supplémentaire (25, 31, 32, 33) qui repère une autre portion (101) dudit panneau (4) qui a déjà été coupée.

3. Procédé selon la revendication 1 ou 2, dans lequel ledit affichage comprend la fourniture d'une première indication graphique (25), d'une deuxième indication graphique (31) et d'une troisième indication graphique (32), qui repèrent respectivement une partie de ladite portion (100) qui, après avoir été coupée, doit être enlevée de ladite machine (1) et n'a pas à être à nouveau coupée, une autre partie de ladite portion (100) qui, après avoir été coupée, doit être enlevée de ladite machine (1) et ne doit pas être réutilisée une nouvelle fois, et encore une autre partie de ladite portion (100) qui, après avoir été coupée, doit être enlevée de ladite machine (1) et peut être réutilisée une nouvelle fois.

4. Procédé selon une quelconque revendication précédente, dans lequel ledit affichage comprend la fourniture d'une quatrième indication graphique (33) et d'une cinquième indication graphique (34), qui repèrent respectivement une nouvelle partie de ladite portion (100) qui, après avoir été coupée, doit être enlevée de ladite machine (1) et doit être mise en place dans une pile, et une nouvelle autre partie de ladite portion (100) qui, après avoir été coupée, doit rester sur ladite machine (1) afin d'être coupée à nouveau ultérieurement.

5. Procédé selon la revendication 4, dans la mesure où la revendication 4 dépend de la revendication 3, et dans la mesure où la revendication 3 dépend de la revendication 2, dans lequel ladite indication graphique supplémentaire (25, 31, 32, 33) comprend ladite première indication graphique (25) et/ou ladite deuxième indication graphique (31) et/ou ladite troisième indication graphique (32) et/ou ladite quatrième indication graphique (33).

6. Procédé selon l'une quelconque des revendications 2 à 5, dans la mesure où les revendications 3 et 4 dépendent de la revendication 2, dans lequel ledit affichage comprend la fourniture d'une sixième indication graphique (61) qui indique de combien de degrés et dans quelle direction on doit faire tourner ladite portion (100) avant qu'elle ne soit coupée, d'une septième indication graphique (62), qui repère un côté de ladite portion (100) qui doit être positionné de manière sensiblement parallèle à une direction de coupe (X) le long de laquelle ladite portion (100) est coupée, et d'une huitième indication graphique (63), qui repère une première butée (13) de ladite machine (1) agencée pour venir en butée sur ledit côté ou un autre côté de ladite portion (100) opposé audit côté et s'étendant de manière sensiblement parallèle à ladite direction de coupe (X).

7. Procédé selon la revendication 6, dans lequel ladite huitième indication graphique (63) comprend une première dimension (Q1) indiquant une position de ladite première butée (13) sur ladite machine (1), et ledit affichage comprend l'accentuation de ladite huitième indication graphique (63) lorsque ladite première butée (13) doit venir en butée sur ledit côté ou ledit autre côté.

8. Procédé selon la revendication 6 ou 7, dans lequel ledit affichage comprend la fourniture d'une neuvième indication graphique (64) qui repère une deuxième butée (14) de ladite machine (1) agencée pour venir en butée sur ledit côté ou ledit autre côté, ladite neuvième indication graphique (64) comprenant une deuxième dimension (Q2) qui indique une position de ladite deuxième butée (14) sur ladite machine (1), et ledit affichage comprenant l'accentuation de ladite neuvième indication graphique (64) lorsque ladite deuxième butée (14) doit venir en butée sur ledit côté ou ledit autre côté.

9. Procédé selon l'une quelconque des revendications 6 à 8, dans lequel ledit affichage comprend la fourniture d'une dixième indication graphique (65) qui repère une troisième butée (15) de ladite machine (1) agencée pour venir en butée sur ledit côté ou ledit autre côté, ladite dixième indication graphique (65) comprenant une troisième dimension (Q3) qui indique une position de ladite troisième butée (15) sur ladite machine (1), et ledit affichage comprenant l'accentuation de ladite dixième indication graphique (65) lorsque ladite troisième butée (15) doit venir en butée sur ledit côté ou ledit autre côté.

10. Procédé selon l'une quelconque des revendications 6 à 9, dans lequel ledit affichage comprend la fourniture d'une onzième indication graphique (66) qui repère un élément de guidage (16) de ladite machine (1) agencé pour venir en butée sur ledit côté ou ledit autre côté, ladite onzième indication graphique (66) comprenant une quatrième dimension (Q4) qui indique une position dudit élément de guidage (16) sur ladite machine (1), et ledit affichage comprenant l'accentuation de ladite onzième indication graphique (66) lorsque ledit élément de guidage (16) doit venir en butée sur ledit côté ou ledit autre côté.

11. Procédé selon une quelconque revendication précédente, dans lequel ledit affichage comprend la fourniture d'une douzième indication graphique (67) pour la gestion d'un empilement de portions semi-finies dudit panneau (4) selon le critère « dernier entré, premier sorti » (dit « LIFO »), d'une treizième indication graphique (92) qui repère une ligne de coupe de ladite machine (1) sur ladite portion (100), et d'une quatorzième indication graphique qui montre ladite machine de coupe (1).

12. Procédé selon l'une quelconque des revendications 4 à 11, dans la mesure où les revendications 4, 6 et 11 dépendent de la revendication 2, dans lequel ladite portion, ladite autre portion, ladite partie, ladite autre partie, ladite encore une autre partie, ladite nouvelle partie et ladite nouvelle autre partie sont identifiées par un code de couleur et/ou par des arrière-plans.

13. Procédé selon une quelconque revendication précédente, dans lequel ladite séquence peut être sélectionnée sur commande, parmi une pluralité de séquences.

14. Procédé selon une quelconque revendication précédente, dans lequel ledit affichage graphique (20) et ladite séquence d'opérations sont affichés sur des moyens d'écran (19) de ladite machine (1).

15. Programme comprenant un code pour mettre en oeuvre le procédé selon les revendications 1 à 14, lorsque ledit programme est exécuté dans un système d'ordinateur.

16. Support de données pouvant être lu par un ordinateur et contenant un programme selon la revendication 15.

17. Système d'ordinateur dans lequel un programme selon la revendication 15 a été chargé ou mémorisé.
